Europäisches Patentamt

**European Patent Office**

Office européen des brevets

(11) Veröffentlichungsnummer: **0 057 267**
**B1**

(12) **EUROPÄISCHE PATENTSCHRIFT**

(51) Int. Cl.³: **A 01 J  7/00**, G 01 F  15/08

(45) Veröffentlichungstag der Patentschrift:
30.05.84

(21) Anmeldenummer: 81109086.9

(22) Anmeldetag: 28.10.81

(54) Milchmengenmessgerät zum Messen der von einer Kuh im Zuge des Melkens abgegebenen Gesamtmilchmenge.

(30) Priorität: 04.02.81  DE 3103669

(43) Veröffentlichungstag der Anmeldung:
11.08.82 Patentblatt 82/32

(45) Bekanntmachung des Hinweises auf die Patenterteilung:
30.05.84 Patentblatt 84/22

(84) Benannte Vertragsstaaten:
AT BE CH FR GB IT LI NL SE

(56) Entgegenhaltungen:
EP - A - 0 041 120
DE - A - 2 753 110
DE - B - 1 122 319
GB - A - 1 316 573
US - A - 3 714 823
US - A - 3 919 975
US - A - 4 188 910

(73) Patentinhaber: **Westfalia Separator AG,**
**Werner-Habig-Strasse 1 Postfach 3720,**
**D-4740 Oelde 1 (DE)**

(72) Erfinder: **Icking, Friedrich, Dipl.-Ing.,**
**Paul-Keller-Strasse 1, D-4740 Oelde 1 (DE)**
Erfinder: **Stolte, Friedrich, Diekhäger Strasse 11,**
**D-4802 Halle (DE)**

(74) Vertreter: **Stracke, Alexander, Dipl.-Ing. et al,**
**Patentanwälte Dipl.-Ing. Loesenbeck Dipl.-Ing. Stracke**
**Jöllenbecker Strasse 164 Postfach 5605,**
**D-4800 Bielefeld 1 (DE)**

**Beschreibung**

Die Erfindung bezieht sich auf ein Milchmengenmessgerät für Melkanlagen zum unmittelbaren Messen der von einer Kuh im Zuge des Melkens abgegebenen Milchmenge, mit einer unterdruckbeaufschlagten Trennkammer zum Abscheiden der Milch aus dem abgemolkenen Milch-Luft-Gemisch sowie mit einer, durch eine ständig geöffnete Einströmöffnung mit der Trennkammer verbundenen Messkammer, die zwei in Abstand voneinander übereinander liegenden Sensoren aufweist, mit denen Teilmengenmessungen bei ständigem Milchzufluss zur Trennkammer durchführbar sind und die Trennkammer im Bereich des Unterbodens mit einer durch ein Ventil verschliessbaren Auslauföffnung ausgerüstet ist.

Es ist ein Milchmengenmessgerät dieser Art schon vorgeschlagen worden (nicht vorveröffentlichte EP-A-0 041 120), mit dem die Gesamtmilchmenge durch die Summierung aufeinanderfolgender Einzelmengenmessungen in der Weise erfolgten, dass durch die Messung der Auffüllzeit eine durch die ventilgesteuerte Auslauföffnung auf ein unteres Niveau abgesenkten Volumens die momentane Milchmengenleistung bestimmt, die mittlere Zuflussmenge während der Auffüllzeit errechnet, die Ablaufzeit bei nachfolgend geöffnetem Auslaufventil gemessen und die in der Summe der Auffüllzeit und der Ablaufzeit ermolkene Milchmenge errechnet wird.

Bei diesem Messverfahren kommt es nicht darauf an, dass der Ausfluss immer konstant ist, so dass die Gestaltung der Milchauslauföffnung konstruktiv weitgehend frei ist und gross gehalten werden kann. Bei diesem Messverfahren kann ferner das Milchmengenmessgerät in besonders kleinen Abmessungen ausgeführt werden, da die Messgenauigkeit unabhängig von der Füllhöhe ist.

Bei dem älteren Vorschlag wird die Messgenauigkeit dadurch beeinträchtigt, dass in der Trennkammer eine vollständige Trennung der Luft von der Milch durch die kurze Verweilzeit in der Trennkammer nicht gelingt und die von der Messkammer aufgenommene Milch einen relativ hohen Luftanteil aufweist.

Der Erfindung liegt die Aufgabe zugrunde, ein Milchmengenmessgerät in der eingangs genannten Art so zu gestalten, dass in die Messkammer ausschliesslich luftfreie Milch mit einem bei der Messung vernachlässigbaren geringen Luftgehalt gelangen kann.

Diese Aufgabe wird nach der Erfindung dadurch gelöst, dass die Einströmöffnung der Messkammer in der Nähe des Unterbodens der Trennkammer angeordnet ist, vom Unterboden der Trennkammer sich ein Stausteg in die Trennkammer erstreckt, dessen oberer Rand höher liegt als der Öffnungsrand der Einströmöffnung, der Stausteg mit mindestens einer Entleerungsöffnung versehen ist und an der Innenwandung der Trennkammer endet oder dass der Zufluss zur Messkammer und der Abfluss aus der Messkammer über Drosselöffnungen erfolgt, die in einer vom Unterboden nach oben sich erstreckenden Zwischenwand vorgesehen sind.

Durch diese Ausbildungen der Trenn- und der Messkammer wird erreicht, dass bis zur Höhe des Stausteges oder in Vorkammern sich oberhalb des Unterbodens luftfreie oder luftarme Milch ansammelt, die durch die im Bereich des Stausteges oder der Vorkammern liegende Einströmöffnung der Messkammer in die Messkammer gelangen kann. Beim Ausfliessen der Milch kann diese beliebig viel Luft enthalten, da durch die kommunizierende Verbindung zwischen Trenn- und Messkammer die Flüssigkeitssäulen der lufthaltigen Milch in der Trennkammer und der luftfreien Milch in der Messkammer im Gleichgewicht stehen.

Die Teilmengenmessungen, die mittels der Sensoren der Messkammer vorgenommen werden, werden somit nicht durch einen Luftgehalt der Milch verfälscht, so dass es unerheblich ist, ob in dem Teil der Trennkammer, der oberhalb des Stausteges oder ausserhalb der Vorkammern liegt, ein Milch-Luft-Gemisch vorhanden ist, das einen relativ hohen Luftanteil besitzt.

Bei einer vorteilhaften Ausführungsform der Erfindung ist der Querschnitt der Messkammer klein im Verhältnis zum Querschnitt der Trennkammer, und das Volumen des Raumes zwischen dem Stausteg und der Messkammer ist grösser als das Volumen zwischen den Sensoren der Messkammer.

Weitere Kennzeichen und Merkmale der Erfindung ergeben sich aus den Unteransprüchen und der folgenden Beschreibung vorteilhafter beispielsweiser Ausführungsformen.

Es zeigen:

Fig. 1 ein Milchmengenmessgerät im Vertikalschnitt,
Fig. 2 einen Schnitt nach der Linie II–II in Fig. 1,
Fig. 3 ein weiteres Ausführungsbeispiel im Vertikalschnitt,
Fig. 4 einen Schnitt nach der Linie IV–IV in Fig. 3,
Fig. 5 eine Vorrichtung zum selbsttätigen Abnehmen des Melkzeuges unter Verwendung des Milchmengenmessgerätes nach den Fig. 3 und 4.

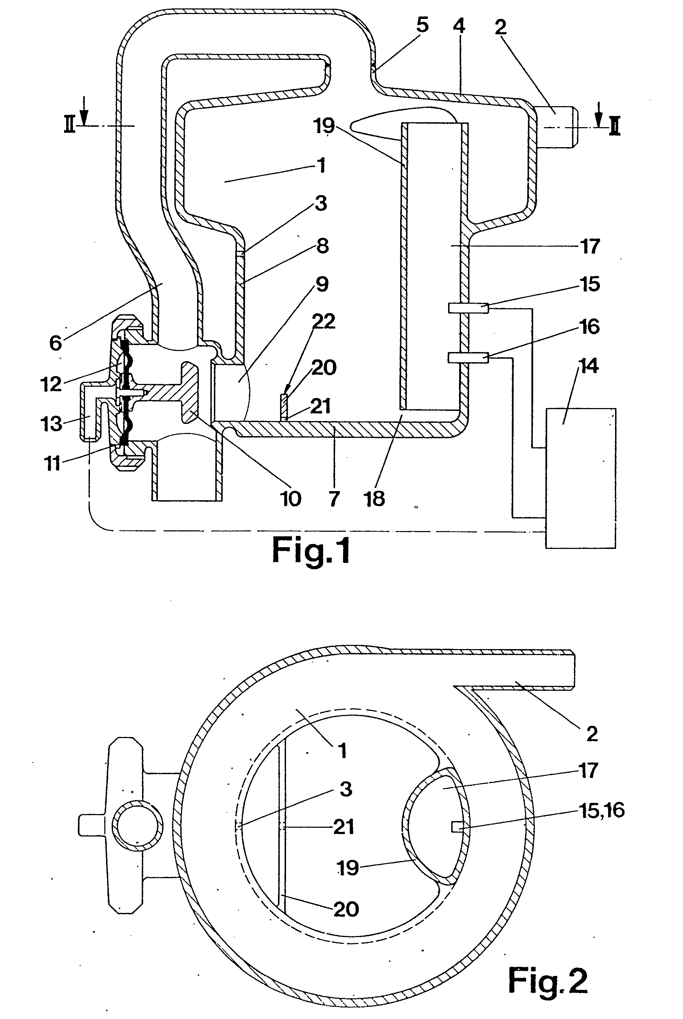

Das in den Fig. 1 und 2 aufgezeigte Milchmengenmessgerät ist mit einer Trennkammer 1 ausgerüstet, der das abgemolkene Milch-Luft-Gemisch tangential über einen Stutzen 2 zugeführt wird. In die Trennkammer mündet eine Luftdüse 3 ein, mittels der unter Atmosphärendruck stehende Luft in die Trennkammer eingeführt wird, die zur Zerstörung des Schaumes des Milch-Luft-Gemisches verwendet wird. Der Oberboden 4 der Trennkammer 1 weist einen Anschlussstutzen 5 für eine Unterdruckleitung 6 auf. Mittels dieses Unterdruckes wird die dem Milch-Luft-Gemisch abgeschiedene Luft abgesaugt.

Die Trennkammer 1 weist ferner einen Unterboden 7 auf, in dessen Nähe in der Aussenwand 8 des Gerätes eine Auslassöffnung 9 vorgesehen ist, die mittels eines Ventilkörpers 10 verschlossen werden kann. Der Ventilkörper 10 ist an einer Membran 11 befestigt, die eine Steuerkammer 12 an der Innenseite begrenzt, die über einen Stutzen 13 mit Luft atmosphärischen Druckes oder Unterdruck beaufschlagt werden kann.

Das Öffnen und Schliessen des der Auslauföffnung 9 zugeordneten Ventils wird mittels eines elektronischen Steuergerätes 14 vorgenommen, das elektrisch mit Sensoren 15, 16 verbunden ist, die in Abstand voneinander übereinander liegend in der Aussenwand 8 des Gerätes festgelegt sind und in eine Messkammer 17 ragen. Die Messkammer 17 ist benachbart dem Unterboden 7 mit einer Einströmöffnung 18 ausgerüstet und weist eine bogenförmig verlaufende innere Begrenzungswand 19 auf.

Von dem Unterboden 7 erstreckt sich in das Innere der Trennkammer 1 ein Stausteg 20, der mit mindestens einer Entleerungsöffnung 21 ausgerüstet ist, die einen kleinen Querschnitt aufweist. Aus der Fig. 2 ergibt sich, dass der Stausteg 20 an der Aussenwand 8 der Trennkammer endet.

In dem Ausführungsbeispiel nach den Fig. 1 und 2 ist der Stausteg 20 benachbart der Auslauföffnung 9 der Trennkammer 1 angeordnet.

Der obere Rand 22 des Stausteges 20 liegt höher als der Öffnungsrand der Einströmöffnung 18. Hierdurch wird erreicht, dass sich im unteren Teil der Trennkammer bis zur Höhe des Stausteges 20 luftfreie und luftarme Milch sammelt und in diese Milch das untere Ende der Messkammer hineinragt. In die Messkammer gelangt somit nur luftfreie oder luftarme Milch.

Die Auslassöffnung 9 braucht nicht als kalibrierte Öffnung ausgebildet zu sein. Die Füllung der Messkammer wechselt während des Messbetriebes zwischen den Höhenlagen, die durch die Sensoren 15 und 16 bestimmt sind. Sobald die obere Fläche der Milchsäule in der Messkammer den unteren Sensor 16 erreicht hat, wird der Ventilkörper 10 in die Verschlussstellung gefahren und verschliesst die Auslauföffnung 9. In dem folgenden Zeitraum steigt der Pegelstand der Milchsäule in der Messkammer 17 an, bis die obere Fläche der Milchsäule den oberen Sensor 15 erreicht. Über das Steuergerät 14 wird dann das der Auslauföffnung 9 zugeordnete Ventil in die Öffnungsstellung gebracht.

Durch die in der nicht vorveröffentlichten EP-A-0 041 120 beschriebene Summierung der Teilmengenmessungen wird die Gesamtmilchmenge ermittelt.

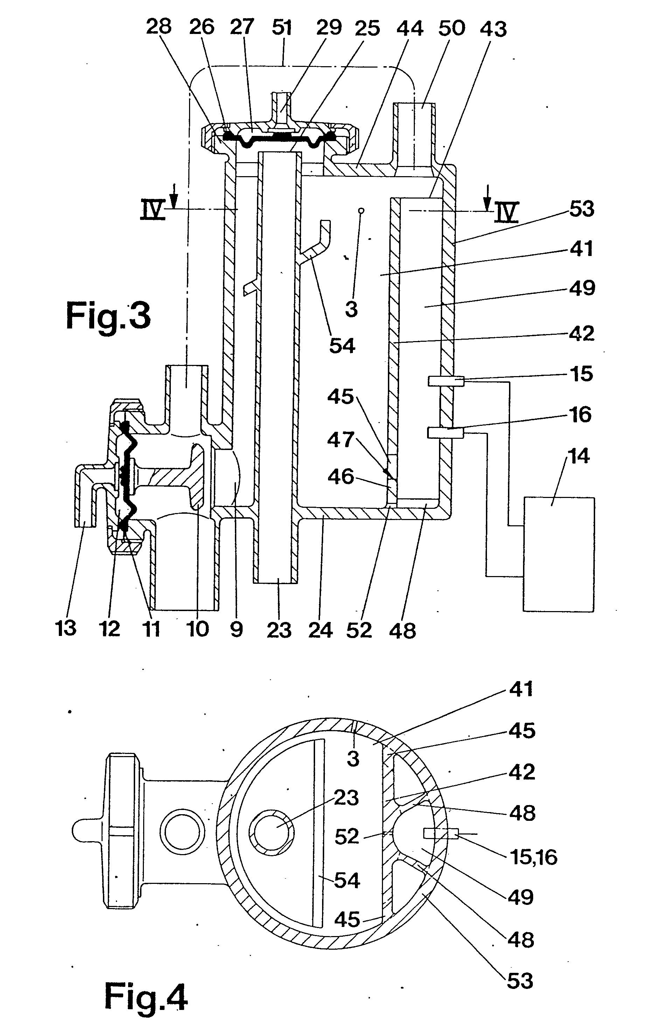

Bei dem Ausführungsbeispiel nach den Fig. 3 und 4 wird das Milch-Luft-Gemisch durch ein Zulaufrohr 23 zugeführt, das sich vom Unterboden 24 über die gesamte Höhe des Gerätes erstreckt und dessen obere Öffnung 25 über ein luftgesteuertes, mit einer Membran 26 ausgerüstetes Ventil verschliessbar ist. Die Steuerkammer 27 des Ventils, die an einer Seite durch die in dem Ventilgehäuse 28 eingespannte Membran 26 begrenzt wird, wird über einen Stutzen 29 mit Steuerluft oder Unterdruck beaufschlagt.

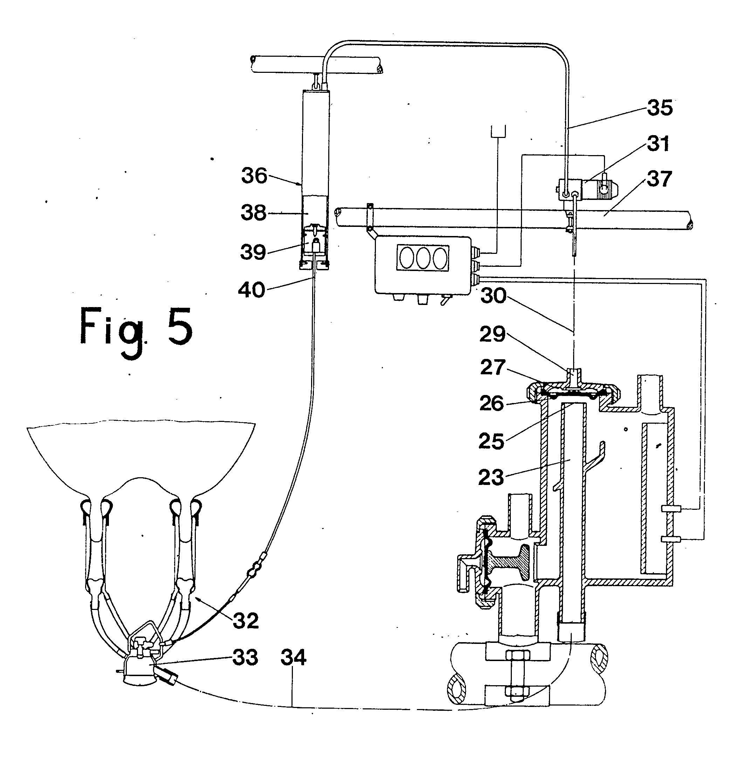

Wie dies in der Fig. 5 aufgezeigt ist, kann an dem Stutzen 29 eine Verbindungsleitung 30 angeschlossen sein, die zu einem Mehrwegschieber 31 einer Vorrichtung zur selbsttätigen Trennung des Melkzeuges 32 bzw. des Milchsammelstücks 33 führt. Das Zulaufrohr 23 ist über eine Schlauchleitung 34 mit dem Milchsammelstück 33 verbunden.

Von dem Mehrwegschieber 31 führt eine Leitung 35 zu der Abnehmvorrichtung 36 für das Melkzeug und eine Leitung 37 zur nicht dargestellten Vakuumpumpe.

Sofern in einer Betriebsstellung des Mehrwegschiebers die Zylinderkammer 38 auf Unterdruck geschaltet ist, wird über die Membran 26, die in der Steuerkammer 27 mit atmosphärischem Druck belastet wird, die Öffnung 25 des Zulaufrohres 23 geschlossen. In dieser Betriebsstellung des Mehrwegschiebers 31 wird ein Kolben 39, der mit einer Stange 40 verbunden ist, in die Zylinderkammer 38 eingefahren und das Melkzeug 32 vom Euter abgezogen.

In der anderen Betriebsstellung des Mehrwegschiebers steht die Steuerkammer 27 unter Unterdruck, so dass die Membran 26 die in der Fig. 3 aufgezeigte Stellung einnimmt, während die Zylinderkammer 38 mit atmosphärischem Druck beaufschlagt wird. Die Kolben 39 und die Stange 40 nehmen in dieser Betriebsstellung die in der Fig. 5 aufgezeigte Lage ein.

Bei dem Ausführungsbeispiel nach den Fig. 3 und 4 weist die Trennkammer 41 eine Zwischenwand 42 auf, deren oberer Rand 43 im Abstand vom Oberboden 44 endet und im Abstand zum Unterboden 24 Öffnungen 45 aufweist, wodurch ein Stausteg 46 gebildet wird, dessen oberer Rand 47 höher liegt als die Einströmöffnung 48 zur Messkammer 49. Durch die Zwischenwand 42 findet eine Beruhigung des von oben zufliessenden Milch-Luft-Gemisches statt, so dass eine Schaumbildung in Grenzen gehalten wird und die Milch ohne Lufteinschluss über Einströmöffnungen 48 in die Messkammer 49 einfliessen kann. An dem Oberboden 44 ist ein Anschlussstutzen 50 für eine Unterdruckleitung 51 angeschlossen. Der Stausteg 46 ist mit einer Entleerungsöffnung 52 versehen.

Wie sich aus der Fig 4 ergibt, grenzt die Zwischenwand 42, die die Messkammer 49 zur Trennkammer 41 begrenzt, an die Aussenwand 53 der Trennkammer.

Das Zulaufrohr 23 weist einen Kragen 54 auf, über den die Milch schonend von der Öffnung des Zulaufrohres 23 in die Trennkammer 41 einfliessen kann.

In Abwandlung der in den Fig. 3 und 4 aufgezeigten Ausführungsform ist es auch möglich, die Öffnungen 45 durch Drosselöffnungen zu ersetzen, die als vom Unterboden 24 nach oben sich erstreckende Schlitze ausgebildet sein können. Bei dieser Ausführungsform entfällt die Entleerungsöffnung 52. Der Zufluss zur Messkammer 49 und der Abfluss aus der Messkammer erfolgen durch Drosselschlitze.

Aus der Fig. 4 ist zu entnehmen, dass der Messkammer 49 Vorkammern zugeordnet sind, durch die der Zufluss zu der Messkammer und der Abfluss aus der Messkammer erfolgen.

**Patentansprüche**

1. Milchmengenmessgerät für Melkanlagen zum unmittelbaren Messen der von einer Kuh im Zuge des Melkens abgegebenen Milchmenge, mit einer unterdruckbeaufschlagten Trennkammer (1, 41) zum Abscheiden der Milch aus dem abgemolkenen Milch-Luft-Gemisch sowie mit einer, durch eine ständig geöffnete Einströmöffnung (18, 48) mit der Trennkammer (1, 41) verbundenen Messkammer (17, 49), die zwei in Abstand voneinander übereinander liegende Sensoren (15, 16) aufweist, mit denen Teilmengenmessungen bei ständigem Milchzufluss zur Trennkammer (1, 41) durchführbar sind und die Trennkammer (1, 41) im Bereich des Unterbodens (7, 24) mit einer durch ein Ventil (10) verschliessbaren Auslauföffnung (9) ausgerüstet ist, dadurch gekennzeichnet, dass die Einströmöffnung (18, 48) der Messkammer (17, 49) in der Nähe des Unterbodens der Trennkammer (1, 41) angeordnet ist, von dem Unterboden der Trennkammer sich ein Stausteg (20, 46) in die Trennkammer erstreckt, dessen oberer Rand (22, 47) höher liegt als der Öffnungsrand der Einströmöffnung, der Stausteg mit mindestens einer Entleerungsöffnung (21, 52) versehen ist und an der Aussenwandung (8, 53) der Trennkammer endet oder dass der Zufluss zur Messkammer (49) und der Abfluss aus der Messkammer (49) über Drosselöffnungen erfolgt, die in einer vom Unterboden (24) nach oben sich erstreckenden Zwischenwand (42) vorgesehen sind.

2. Milchmengenmessgerät nach Anspruch 1, dadurch gekennzeichnet, dass der Durchmesser der Auslauföffnung (9) der Trennkammer grösser ist als die Höhe des Stausteges (20, 46).

3. Milchmengenmessgerät nach Anspruch 1 oder 2, dadurch gekennzeichnet, dass der Stausteg (20) benachbart der Auslauföffnung (9) der Trennkammer (1) angeordnet ist.

4. Milchmengenmessgerät nach Anspruch 1, dadurch gekennzeichnet, dass in der Trennkammer (41) eine Zwischenwand (42) angeordnet ist, deren oberer Rand (43) in Abstand vom Oberboden (44) der Trennkammer endet.

5. Milchmengenmessgerät nach einem der Ansprüche 1 bis 4, dadurch gekennzeichnet, dass der Querschnitt der Messkammer (17, 49) klein ist im Verhältnis zum Querschnitt der Trennkammer (1, 41).

6. Milchmengenmessgerät nach einem der Ansprüche 1 bis 5, dadurch gekennzeichnet, dass der Stausteg (46) in der Zwischenwand (42) zur Messkammer (49) vorgesehen ist.

7. Milchmengenmessgerät nach einem der Ansprüche 1 bis 6, dadurch gekennzeichnet, dass an dem Oberboden (4, 44) ein Anschlussstutzen (5, 50) für die Unterdruckleitung (6, 51) angeschlossen ist.

8. Milchmengenmessgerät nach einem der Ansprüche 1 bis 7, dadurch gekennzeichnet, dass das Volumen des Raumes zwischen dem Stausteg (20, 46) und der Messkammer (17, 49) grösser ist als das Volumen zwischen den Sensoren (15, 16) der Messkammer.

9. Milchmengenmessgerät nach einem der Ansprüche 1 bis 8, dadurch gekennzeichnet, dass das Milch-Luft-Gemisch durch ein Zulaufrohr (23) zuführbar ist, das sich vom Unterboden (24) über die gesamte Höhe, des Gerätes erstreckt und dessen obere Öffnung (25) über ein luftgesteuertes, mit einer Membran (26) ausgerüstetes Ventil verschliessbar ist und an dem Stutzen des Ventilgehäuses zum Zuführen der Steuerluft eine zu einem Mehrwegeschieber (31) führende Verbindungsleitung (30) angeschlossen und mittels des Mehrwegschiebers eine Vorrichtung zur selbsttätigen Trennung des Melkzeuges (32) vom Euter betätigbar ist.

10. Milchmengenmessgerät nach Anspruch 1, dadurch gekennzeichnet, dass die Drosselöffnungen in der Zwischenwand (42) als vom Unterboden (24) nach oben sich erstreckende Schlitze ausgebildet sind.

11. Milchmengenmessgerät nach Anspruch 10, dadurch gekennzeichnet, dass die mit den Drosselschlitzen versehenen Teile der Zwischenwand (42) mit der Aussenwand (53) Vorkammern für die Messkammer (49) bilden.

**Claims**

1. A milk measuring apparatus for milking installations, for directly measuring the amount of milk produced by a cow in the course of milking, comprising a separating chamber (1, 41) which is subjected to a reduced pressure, for separating the milk from the milk-air mixture which is milked off, and a measuring chamber (17, 49) which is connected to the separating chamber (1, 41) through a constantly opened inlet opening (18, 48) and which has two sensors (15, 16) which are disposed one above the other and a spacing from each other, for carrying out measuring operations in respect of portions of the flow of milk in the constant flow of milk to the separating chamber (1, 41), and the separating chamber (1, 41) is provided in the region of the bottom end portion (7, 24) with the outlet opening (9) which is closable by a valve (10), characterised in that the inlet opening (18, 48) of the measuring chamber (17, 49) is arranged in the vicinity of the bottom end portion of the separating chamber (1, 41), a barrier bar portion (20, 46) extends from the bottom end portion of the separating chamber into the separating chamber, the upper edge (22, 47) of the barrier portion being higher than the edge of the inlet opening, the barrier portion is provided with a least one emptying opening (21, 52) and ends at the outside wall (8, 53) of the separating chamber, or the flow of milk to the measuring chamber (49) and the flow of milk out of the measuring chamber (49) occurs by way of throttle openings which are provided in a partitioning wall (42) which extends upwardly from the bottom end portion (24).

2. Apparatus according to claim 1 characterised in that the diameter of the outlet opening (9) of the separating chamber is larger than the height of the barrier portion (20, 46).

3. Apparatus according to claim 1 or claim 2 characterised in that the barrier portion (20) is arranged adjacent the outlet opening (9) of the separating chamber (1).

4. Apparatus according to claim 1 characterised in that disposed in the separating chamber (41) is a partitioning wall (42), the upper edge (43) of which terminates at a spacing from the top end portion (44) of the separating chamber.

5. Apparatus according to one of claims 1 to 4 characterised in that the cross-section of the mesuring chamber (17, 49) is small in relation to the cross-section of the separating chamber (1, 41).

6. Apparatus according to one of claims 1 to 5 characterised in that the barrier portion (46) is provided in the partitioning wall (42) in relation to the measuring chamber (49).

7. Apparatus according to one of claim 1 to 6 characterised in that a connecting portion (5, 50) for the vacuum conduit (6, 51) is connected to the top end portion (4, 44).

8. Apparatus according to one of claims 1 to 7 characterised in that the volume of the space between the barrier portion (20, 46) and the measuring chamber (17, 49) is a larger than the volume between the sensors (15, 16) of the measuring chamber.

9. Apparatus according to one of claims 1 to 8 characterised in that the milk-air mixture can be supplied through a supply pipe (23) which extends from the bottom end portion (24) over the entire height of the apparatus and the upper opening (25) of which can be closed by way of an air-controlled valve provided with a diaphragm (26) and connected to the connection of the valve housing for supplying the control air is a connecting conduit (30) leading to a multi-way slide valve (31) and a means for automatically separating the milking cup (32) from the udder is actuable by means of the multi-way slide valve.

10. Apparatus according to claim 1 characterised in that the throttle openings in the partitioning wall (42) are in the form of slots which extend upwardly from the bottom end portion (24).

11. Apparatus according to claim 10 characterised in that the parts of the partitioning wall (42) which are provided with the throttle slots, with the outside wall (53), from pre-chambers for the measuring chamber (49).

## Revendications

1. Appareil de mesure de quantités de lait pour installation de traite permettant la mesure directe de la quantité de lait fournie par une vache au cours de la traite et comprenant une chambre de séparation (1, 41), dans laquelle règne une dépression pour la séparation du lait du mélange d'air et de lait provenant de la traite, et une chambre de mesure (17, 49), reliée à la chambre de séparation (1, 41) par une ouverture d'entrée (18, 48) en permanence ouverte et contenant deux détecteurs (15, 16), disposés l'un au-dessus de l'autre, à une certaine distance l'un de l'autre, qui permettent des mesures de quantités partielles pendant le passage continu du lait en direction de la chambre de séparation (1, 41), la chambre de séparation (1, 41) comportant, dans la zone du fond (7, 24), une ouverture de sortie (9) qui peut être obturée par une soupape (10), caractérisé en ce que l'ouverture d'entrée (18, 48) de la chambre de mesure (17, 49) se trouve à proximité du fond de la chambre de séparation (1, 41) et que de ce fond de la chambre de séparation part une paroi de séparation (20, 46) qui s'élève dans la chambre de séparation et dont le bord supérieur (22, 47) est à un niveau plus élevé que le bord d'ouverture de l'ouverture d'entrée, que la paroi de séparation comporte au moins une ouverture de vidage (21, 52) et se termine au niveau de la paroi extérieure (8, 53) de la chambre de séparation ou que l'arrivée du liquide dans la chambre de mesure (49) et l'écoulement du liquide hors de la chambre de mesure (49) s'effectue par des passages d'étranglement qui sont ménagés dans une paroi intermédiaire (42) partant du fond (24) et s'étendant vers le haut.

2. Appareil de mesure de quantités de lait selon la revendication 1, caractérisé en ce que le diamètre de l'ouverture de sortie (9) de la chambre de séparation est plus grand que la hauteur de la paroi de séparation (20, 46).

3. Appareil de mesure de quantités de lait selon l'une des revendications 1 ou 2, caractérisé en ce que la paroi de séparation (20) est placée au voisinage de l'ouverture de sortie (9) de la chambre de séparation (1).

4. Appareil de mesure de quantités de lait selon la revendication 1, caractérisé en ce que la chambre de séparation (41) comporte une paroi intermédiaire (42) dont le bord supérieur (43) se termine à une certaine distance du plafond (44) de la chambre de séparation.

5. Appareil de mesure de quantités de lait selon l'une quelconque des revendications 1 à 4, caractérisé en ce que la section de la chambre de mesure (17, 49) est petite par rapport à la section de la chambre de séparation (1, 41).

6. Appareil de mesure de quantités de lait selon l'une quelconque des revendications 1 à 5, caractérisé en ce que la paroi de séparation (46) est ménagée dans la paroi intermédiaire (42) délimitant la chambre de mesure (49).

7. Appareil de mesure de quantités de lait selon l'une quelconque des revendications 1 à 6, caractérisé en ce que le plafond (4, 44) comporte une tubulure de raccord (5, 50) pour la conduite (6, 51) permettant de réaliser la dépression.

8. Appareil de mesure de quantités de lait selon l'une quelconque des revendications 1 à 7, caractérisé en ce que le volume de l'espace compris entre la paroi de séparation (20, 46) et la chambre de mesure (17, 49) est plus grand que le volume compris entre les détecteurs (15, 16) de la chambre de mesure.

9. Appareil de mesure de quantités de lait selon l'une quelconque des revendications 1 à 8, caractérisé en ce que le mélange de lait et d'air peut arriver par un tube d'amenée (23) qui, partant du fond (24), s'étend sur toute la hauteur de l'appareil et dont l'ouverture supérieures (25) peut être fermée par une soupape munie d'une membrane (26) et commandée pneumatiquement, la tubulure de la boîte à soupape étant reliée à une conduite de liaison (30) qui amène l'air assurant cette commande et comporte une soupape à plusieurs voies (31) et cette soupape à plusieurs voies pouvant commander un dispositif détachant automatiquement du pis l'appareil à traire (32).

10. Appareil de mesure de quantités de lait selon la revendication 1, caractérisé en ce que les passages d'étranglement sont ménagés dans la paroi intermédiaire (42) sous la forme de fentes partant du fond (24) et s'étendant vers le haut.

11. Appareil de mesure de quantités de lait selon la revendication 10, caractérisé en ce que les parties de la paroi intermédiaire (42) qui comportent des fentes d'étranglement forment avec la paroi extérieure (53) des chambres antérieures de la chambre de mesure (49).

0 057 267

**Fig.1**

**Fig.2**

Fig.3

Fig.4

Fig. 5